# EUROPEAN PATENT SPECIFICATION

(11) **EP 1 110 392 B1**
(45) Date of publication and mention of the grant of the patent: **11.08.2004**
(21) Application number: 99944032.4
(22) Date of filing: 01.09.1999
(51) Int. Cl.: H04N 5/913

(54) **METHOD AND APPARATUS TO SYNTHESIZE AND DEFEAT VIDEO COPY PROTECTION SIGNALS**
VERFAHREN UND ANLAGE ZUM HERSTELLEN UND UNWIRKSAM MACHEN VON VIDEOKOPIERSCHUTZSIGNALEN
PROCEDE ET APPAREIL SERVANT POUR SYNTHETISER ET RENDRE INOPERANTS LES SIGNAUX DE PROTECTION ANTIPIRATAGE VIDEO

(30) Priority: 02.09.1998 US 98804 P
(43) Date of publication of application: 27.06.2001
(73) Proprietor: MACROVISION CORPORATION, Sunnyvale, CA 94089 (US)
(72) Inventor: QUAN, Ronald, Cupertino, CA 95014 (US); BRILL, Gerow, D., Danbury, CT 06810 (US)
(74) Representative: Needle, Jacqueline
(86) International application number: PCT/US1999/020010
(87) International publication number: WO 2000/013413

(56) References cited:
- WO-A-97/15142
- US-A- 4 888 649
- US-A- 5 157 510

## Description

The present invention relates to a method and apparatus for defeating copy protection signals in one or more selected video lines of a video signal, and to a method and apparatus of providing copy protection signals in a video signal.

The movie industry is very concerned about the unauthorized copying of movies and programs. US-A-4,631,603 discloses the protection of a video signal such that the copy protected video is viewable on a TV set but a recording produced therefrom lacks entertainment value. Thus, the recorded video programs suffer from artifacts ranging from low contrast to synchronizing problems. This US patent describes a method causing misoperation of the AGC system in a video cassette recorder while not causing a black depression problem in a television receiver displaying the copy protected signal.

Polish patent application PL 304477 discloses a variation of this earlier method.

As is well known in the art, the videocassette system has a limited luminance frequency response, less than 2 MHz. A signal as described in US-A-4,631,603 recorded on a videocassette duplicating recorder with AGC turned off (to avoid the effects of copy protection) will produce a video signal with pulse shapes modified by the limited frequency response of the duplicating recorder. Since there is no gap between the pseudo sync pulses and the AGC pulses, the AGC system of a home duplicating recorder will respond to the combination of the pseudo sync pulses and the AGC pulses.

The limited bandwidth of the recording VCR responds slightly differently to the combination of pseudo-sync and AGC pulses separated by a time gap of 0.5 µseconds to 2.0 µseconds. If the time gap is as low as 0.5 µseconds, the limited bandwidth of the recording videocassette recorder distorts the time gap to effectively remove it and the effectiveness of the copy protection is essentially the same. As the gap widens, the effectiveness of the copy protection is reduced or removed.

US patents US-A-4,965,901, US-A-4,336,554, US-A-5,157,510, US-A-5,194,965, US-A-5,583,936, US-A-5,748,733 and US-A-5,661,801 all describe methods of attenuating, blanking, narrowing, level shifting, modifying and/or clipping the copy protection pulses to defeat the copy protection process.

US-A-5,157,510 describes a method and apparatus for disabling the effect of copy-protect signals by narrowing the pulses whereby the frequency content of the pseudo sync pulses and/or the AGC pulses is increased.

The present invention seeks to provide a method of defeating the effects of copy protection signals.

According to a first aspect of the present invention there is provided a method of providing copy protection signals in a video signal employing sync or pseudo sync pulses followed by respective AGC pulses, wherein the AGC pulses are provided with the leading edges thereof generally coincident with the trailing edges of respective sync or pseudo sync pulses thereby having substantially zero position separation consistent with maintaining copy protection, the method comprising:
dynamically increasing over one or more video lines the position separation between the sync or pseudo sync pulses and the respective AGC pulses to a position separation which defeats or reduces the effects of the copy protection signals;
dynamically decreasing over time the position separation between the sync or pseudo sync pulses and the respective AGC pulses to return to the substantially zero position separation that maintains copy protection; and
wherein the steps of dynamically increasing and decreasing are repeated over said one or more video lines.

By dynamically varying the gap from zero to greater than 1.5 µseconds between the trailing edge of the pseudo sync pulse relative to the leading edge of the upcoming AGC pulse, a new copy protection signal is made to effectively mimic those described in US-A-4,631,603. By varying the gap via position modulation of the pseudo sync pulses relative to the AGC pulse or vice versa, or dynamically narrowing or changing the pulse width of the added pulses (AGC pulse and/or sync or pseudo sync pulse), an easier copy protection implementation is possible in the digital domain and/or analog domain. Today's digital domain is the format of choice for implementing copy protection in cable systems and the like (i.e. digital versatile disc players). The range of pulse widths can be, for example, between 50% to 100% of the normal pulse widths (i.e. the pseudo sync pulse normal widths are about 2.3 µseconds and the AGC normal widths are about 2.3µseconds to 3 µseconds depending on how many added pulses are in a television (TV) line).

In general the copy protection method of embodiments of the invention may start having added pulse pairs, where the AGC pulse and/or pseudo sync pulse are position separated relative to time. If the gap due to position separation is insufficient to "turn off" the copy protection process (i.e. position modulation amounts to only 1.0 µsecond of gap), then the AGC pulse and/or pseudo sync pulse can be narrowed as a function of time to increase the gap sufficiently (i.e. slowly trim or narrow the AGC pulse and/or pseudo sync pulse by about 0.35 µsecond each, which would add another 0.7 µsecond to the 1.0 µsecond gap for an increased gap duration of 1.7 µseconds). After the gap has been extended as to "defeat" or turn off the copy protection signal, then the new copy protection signal is reactivated by reducing the separation (for example, to zero) between the AGC pulse and pseudo sync pulse and by restoring the pulse widths of the (trimmed and narrowed) AGC pulses and/or pseudo sync pulse to their full normal pulse widths.

The use of relative position modulation between the sync and AGC pulses for defeating and/or synthesizing a copy protection signal may be applied to the copy protection pulses within or around a horizontal blanking interval. Methods of the invention may also be combined with narrowing any portion of the added pulses.

The AGC pulses may additionally be amplitude modulated from full amplitude to zero and vice versa over the period of, for example, about 20 to 30 seconds. As a result, the illegal copy will have constantly changing brightness levels. This causes more annoyance when compared to a constant dim picture (when the AGC pulses are static and at full amplitude).

The present invention also extends to claim 8.

Embodiments of the present invention will hereinafter be described, by way of example, with reference to the accompanying drawings, in which:
Figure 1a illustrates a basic anticopy process consisting of AGC and pseudo sync pulses;
Figure 1b illustrates a modification to the basic anticopy process consisting of AGC and pseudo sync pulses;
Figure 2 illustrates various ways to position shift the AGC pulse to defeat the copy protection signal, and also shows dynamically shifting the position of the AGC pulse;
Figure 3 illustrates a combination of position shifting and narrowing (trimming) of AGC pulses to defeat the copy protection signal;
Figure 4 illustrates various ways to shift the relative position between AGC pulses and pseudo sync pulses whilst narrowing pseudo sync and/or AGC pulses to defeat the copy protection signal;
Figure 5 illustrates a block diagram of an apparatus for defeating a copy protection signal by delaying the AGC pulses;
Figures 5a to 5e illustrate the waveforms generated at various points in a circuit of Figure 5;
Figure 6 illustrates an apparatus for defeating a copy protection process by inserting a time gap between the pseudo sync pulses and the AGC pulses;
Figure 6a to 6e illustrate several waveforms related or generated by the circuit of Figure 6 given typical copy protection signals as an input;
Figure 7 illustrates an embodiment of copy protection apparatus arranged to generate a dynamically variable time gap between the trailing edge of pseudo sync pulses and the leading edge of AGC pulses;
Figures 7a to 7e illustrate the relevant waveforms that are generated at various points in the circuit of Figure 7;
Figures 8a and 8b illustrate position delay or modulation of raised back porches to be used as a defeat process or as a copy protection signal;
Figure 9a illustrates a prior art copy protection signal, Figure 9b illustrates a defeating or modifying method in which at least portions of the pseudo sync and/or AGC pulses are reversed, and Figure 9c illustrates another method for defeating or modifying the original process by phase shifting portions of the pseudo syncs and/or AGC pulses;
Figure 10 is a block diagram illustrating a circuit for reversing at least portions of the pseudo sync and/or AGC pulses by way of a memory circuit; and
Figure 11 is a block diagram illustrating a circuit for inverting or phase shifting portions of the pseudo syncs and/or AGC pulses by way of an inverting or phase shifting amplifier.

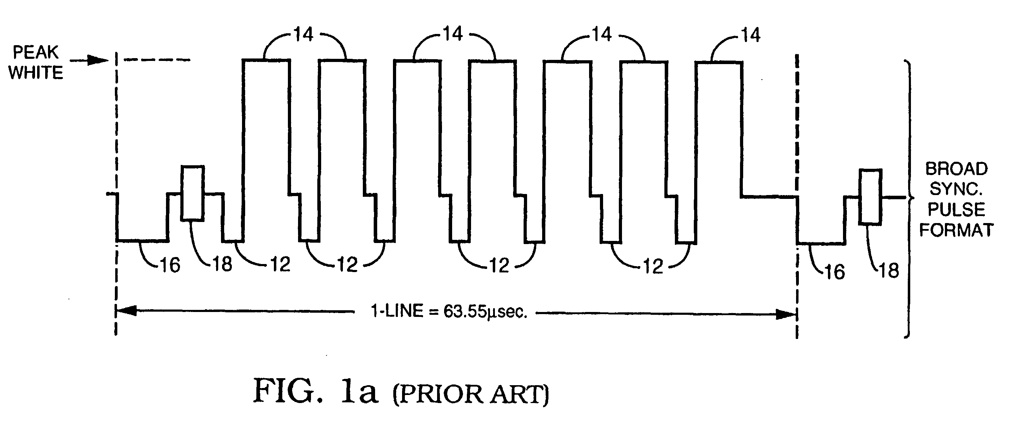

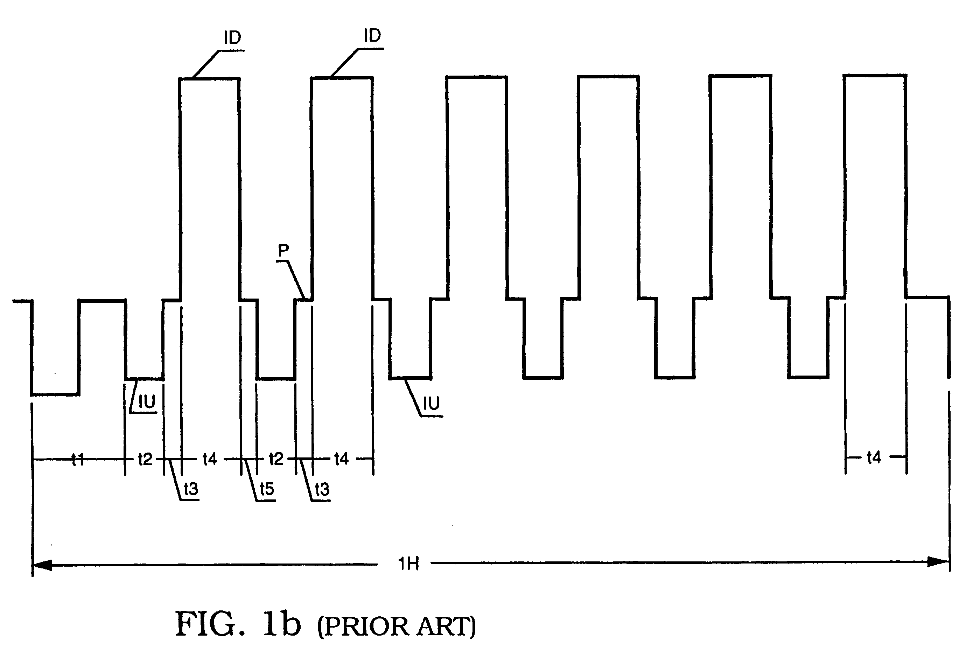

Figures 1a and 1b illustrate prior art copy protection signals as shown in US-A-4,631,602 and PL 304477 respectively.

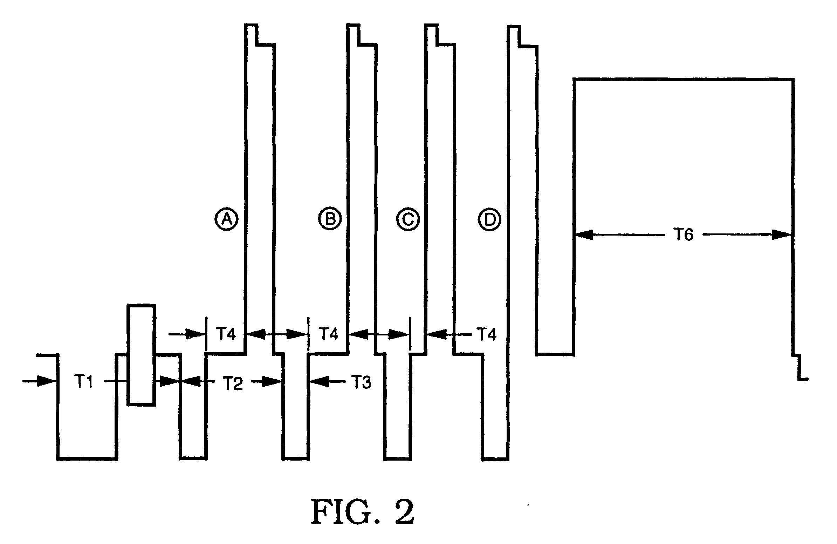

Figure 2 illustrates various waveforms showing how AGC pulses can be delayed to provide copy protection defeating techniques of the invention. First, the waveform D in Figure 2 illustrates the AGC pulse and pseudo sync pulse at the normal position previously shown in Figure 1a which causes copy protection. Waveforms A to C show various delays or gaps between the trailing edge of pseudo sync pulse and the leading edge of the respective AGC pulse. Waveforms A and B are effective in turning off the copy protection signal while waveform C causes partial reduction or turn off of the copy protection signal. For effective defeat of the copy protection signal it follows that waveforms A and B are preferable.

For a new copy protection signal that is dynamically varied from on to off, one technique of the invention starts, for example, with several seconds of the waveform D of Figure 2 (copy protection on) then transitions to the waveform C of Figure 2 (copy protection partially on) and then transitions to the waveform B of the Figure 2 (copy protection turned off). The gap, or separation T4, in Figure 2 is preferably continuously or discretely changing from zero to greater than about 1.5 µseconds. Waveform A is used to turn copy protection off.

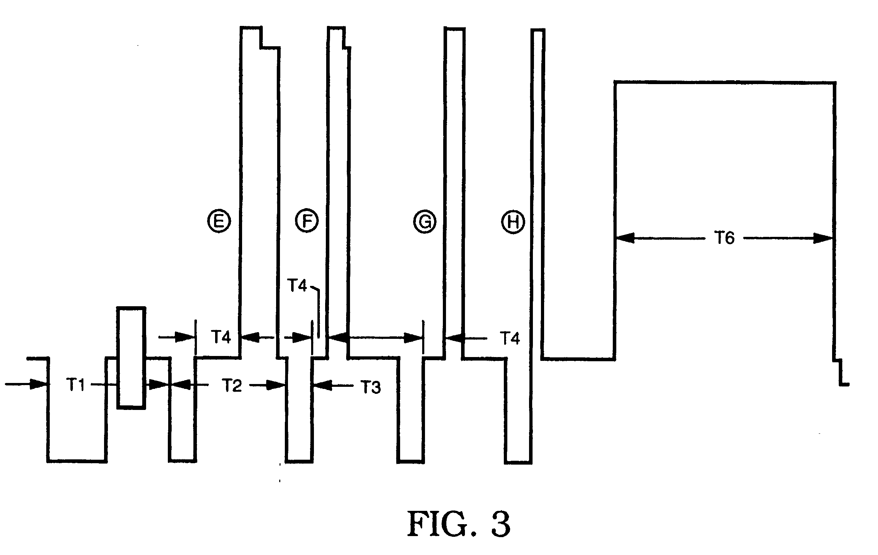

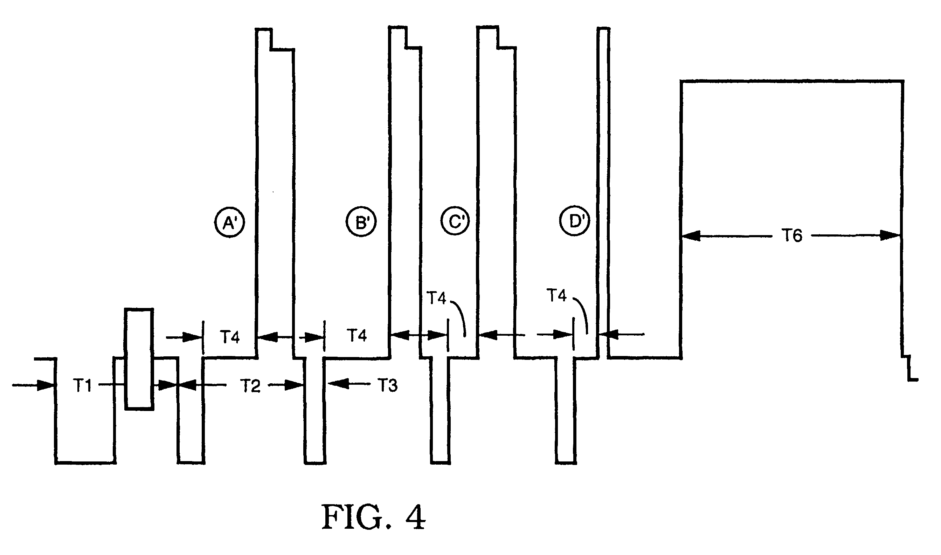

In Figure 2 (as well as Figures 3, 4) the time interval T1 defines the normal sync to the first pseudo sync pulse period, T2 defines the repetition rate of added pseudo sync pulses, T3 defines the pseudo sync pulses' width and T4 defines the gap duration. T6 designates the width of a white reference pulse which may be included as an option.

Figure 3 illustrates a variation of the embodiment of Figure 2 with AGC pulse narrowing, although the pseudo sync pulses can be narrowed as well. In the waveform H of Figure 3, the pulse resembles a narrowed AGC pulse in the patents '510 and '965 of previous mention. While waveform H of Figure 3 can be used for defeating copy protection signals, it can again also be used as part of a copy protection signal. The waveform D of Figure 2 represents a normal copy protection signal which can transition to the waveform H of Figure 3, a signal with a narrowed AGC pulse, and then transition to waveform F of Figure 3, a signal with a gap and narrowed AGC pulse. Finally the copy protection signal can be turned off by a transition to the waveform G of Figure 3, where the gap is larger with a narrowed AGC pulse. Waveform E of Figure 3 is equivalent to waveform A of Figure 2 and is used to defeat copy protection.

Figure 4 illustrates pseudo sync pulse narrowing combined with position delay or modulation of varying pulse widths of the AGC pulses to defeat the copy protection process, or form a dynamic copy protection signal.

The waveform D' of Figure 4 illustrates a defeat process not illustrated in the patents of previous mention by Quan et al '510 and '965. In waveform D' of Figure 4 the pseudo sync pulse's trailing edge is advanced to provide a narrowed pseudo sync followed by a delayed AGC pulse leading edge to provide a narrowed AGC pulse. The waveform C' of Figure 4 illustrates a further gap increase in duration between the AGC pulse by position delaying the AGC pulse using an advanced trailing edge to narrow the pseudo sync pulse. The waveform B' of Figure 4 illustrates a combination of position separation between the AGC pulse and the pseudo sync pulse with narrowed AGC and pseudo sync pulse. Thus, the waveform B' can be used as a method to defeat the copy protection pulses. As may be seen, waveform A' is generally the equivalent of waveforms A and E of Figures 2 and 3, respectively, and also may be used to defeat the effects of copy protection signals.

Alternatively, by employing narrowed pseudo sync pulses and/or AGC pulses that are varied in width, Figure 4 provides a dynamic copy protection signal of the invention based on dynamically changing the gap (separation) and the amount of narrowing on pseudo sync pulses and/or AGC pulses. For example, the embodiment may start with a waveform D as illustrated in Figure 2 to provide the copy protection process, then provide narrowing of the AGC pulses and/or pseudo sync pulses to achieve partial copy protection via the waveform C' in Figure 4, and then transition to a signal such as waveform B' in Figure 4 to turn off the copy protection. The embodiment then reverses the cycle from waveforms B', to C' and back to D to restore the copy protection.

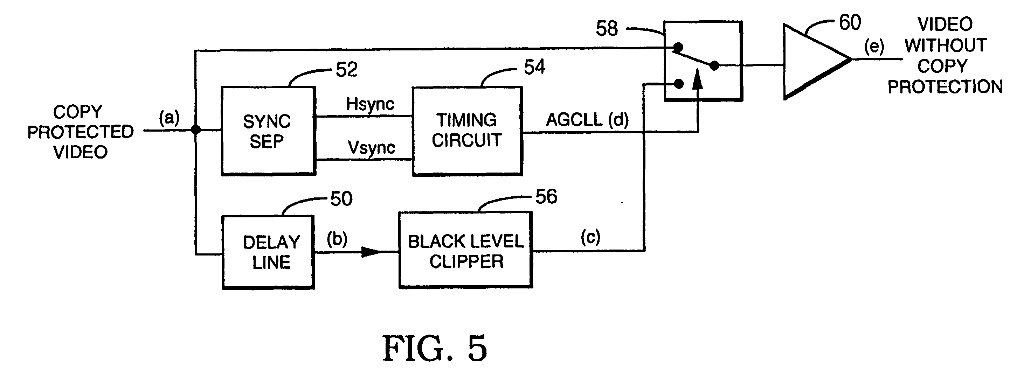

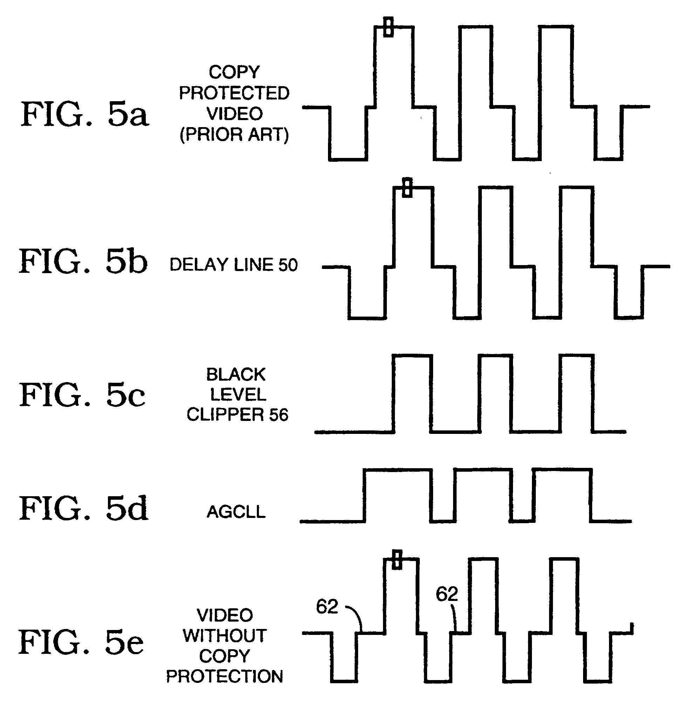

Figure 5 is a block diagram depicting an example of circuitry for defeating the copy protection pulses by delaying the AGC pulses relative to the pseudo sync pulses. To this end, copy protected video is inputted as at (a) to a delay line circuit 50, which delays the input video, and also to a sync separator circuit 52. The output of the sync separator circuit provides horizontal and vertical sync pulses to a timing circuit 54 which in turn outputs pulses at (d) coincident with the video lines containing raised back porch AGC pulses and those with AGC pulses. This output signal, AGCLL, is logic high at least from the leading edge of the AGC pulses of the input video signal to the trailing edge of the AGC pulses which appear at an output (b) of the delay line circuit 50 (delayed input video of about 1.5 µseconds or more). A black clipper circuit 56 coupled to the delay line 50 clips off most or all of the sync pulses. Thus, delayed AGC pulses are supplied at the output (c) of the black clipper circuit. By using an electronic switch 58, with control signal AGCLL to switch in the delayed AGC pulses, the copy protection pulses' effects are then defeated or reduced at the output (e) of an amplifier 60.

Figures 5a through 5e illustrate the waveforms generated at different locations of Figure 5 and is generally self-explanatory. For example, in Figure 5e, the output has a gap, that is, separation 62, corresponding to gap T4 of Figures 2-4, long enough between the sync pulses and AGC pulses to allow recordable copies of the video signal. It should be noted that Figure 5 is just an illustration of an apparatus for producing position delay of AGC pulses to defeat the copy protection signal. It is also possible to design a position delay equivalently by removing substantially the original copy protection signal or parts of it and then regenerating modified pseudo sync pulses and/or AGC pulses. For instance, the incoming copy protection pulses may be removed and then the pseudo sync pulses inserted in advance of the original pseudo sync pulse, with AGC pulses inserted in delayed relation to the original AGC pulses. Thus a gap voltage is produced between the pseudo sync pulses and AGC pulses that allows for a recordable copy.

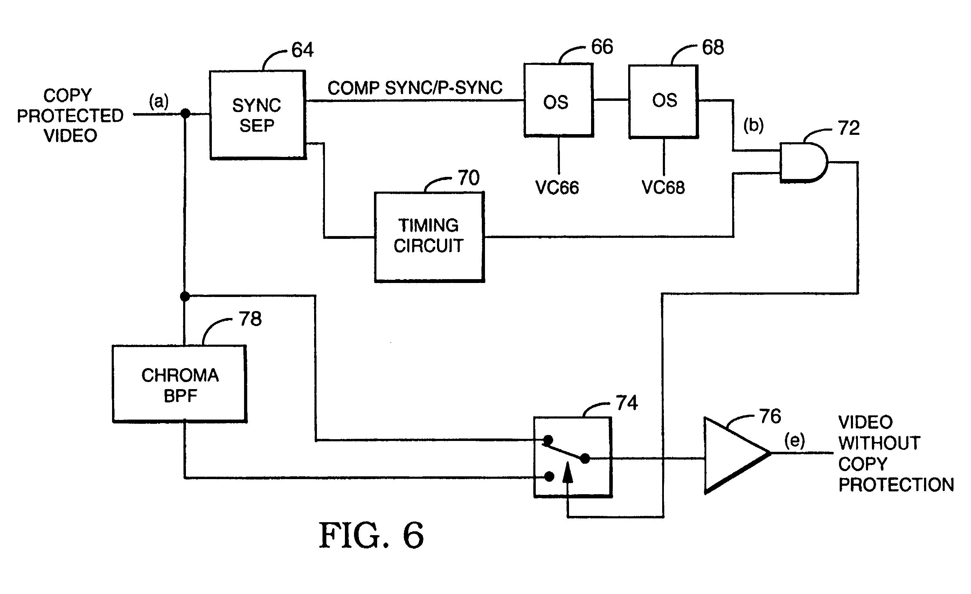

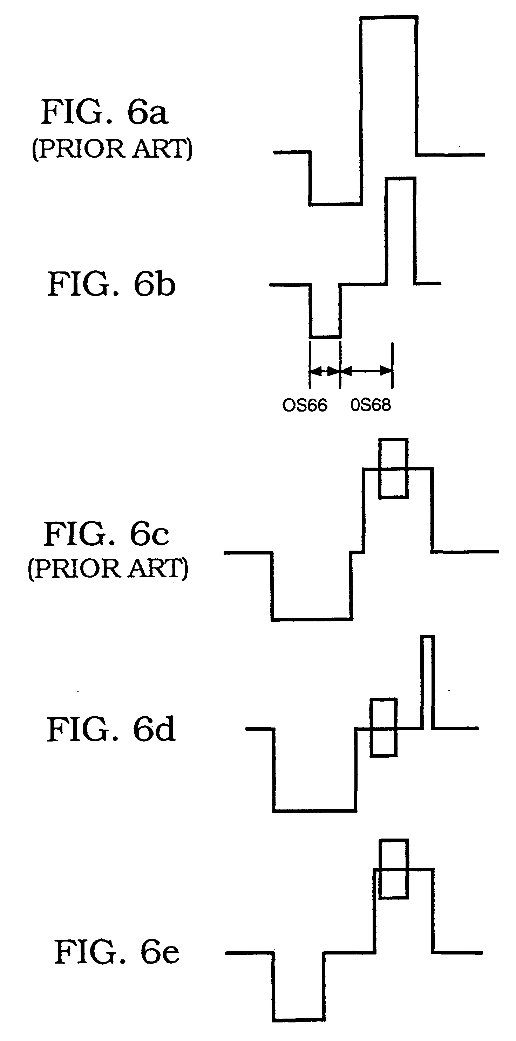

Figure 6 is a block diagram depicting circuitry for creating a time gap around blanking level by trimming off (advancing) the trailing edge of sync and delaying the leading edge of the AGC pulse of the copy protection signal, leading to a recordable copy. This "trimming" is a different form of narrowing not illustrated in the U.S. Patent 5,194,965. Copy protected video is fed at (a) to a sync separator 64 to output composite sync including pseudo sync pulses to a one shot (multivibrator) 66. One shot 66 triggers off the leading edge of sync pulses including pseudo sync pulses, and its pulse width can be controlled via a control voltage VC66. The output (b) of one shot 66 is coupled to another one shot 68 whose pulse width is controlled by another control voltage, VC68. The output (b) of one shot 68 is then a pulse coincident with the latter portion of the sync or pseudo sync pulse and the beginning portion of the AGC pulse of the copy protected input video signal. A sync separator output also is fed to a timing circuit 70 which generates pulses coincident with the copy protection signal within the video lines. The output of the timing circuit 70 and of the one shot 68 are fed to an AND gate 72 to control a switch 74 during the times copy protection pulses are present. The switch 74 receives the copy protected video at (a) and supplies a signal containing a gap voltage between the sync and AGC pulses of copy protection signals, whereby the video signal at an output (e) of an output amplifier 76 allows for a recordable copy. Figure 6 also uses a chroma bandpass filter 78 to generate the gap, but also to reinsert color burst during narrowing of the normal sync and/or raised back porch. As a matter of fact narrowing and/or attenuation and/or level shifting of any kind on the raised back porch AGC pulses and/or its sync signal can result in a recordable copy (see raised back porch AGC signal as in Figure 3 of US Patent 4,819,098 by Ryan).

Figures 6a to 6e show the result of this kind of narrowing. Figure 6a represents a typical copy protection signal consisting of pseudo sync pulses and AGC pulses. Figure 6b shows the narrowed pseudo sync pulses and/or AGC pulses with a gap (voltage) in between. Figure 6c shows a horizontal pulse with a raised back porch AGC pulse in typical fashion of a copy protection signal. Figures 6d and 6e show the result of the apparatus of Figure 6 which narrows the raised back porch AGC pulse (Figure 6d) and/or the horizontal sync pulse (Figure 6e) to allow a recordable copy. Note in Figure 6e the color burst is still present even after narrowing, in the area where burst is normally located.

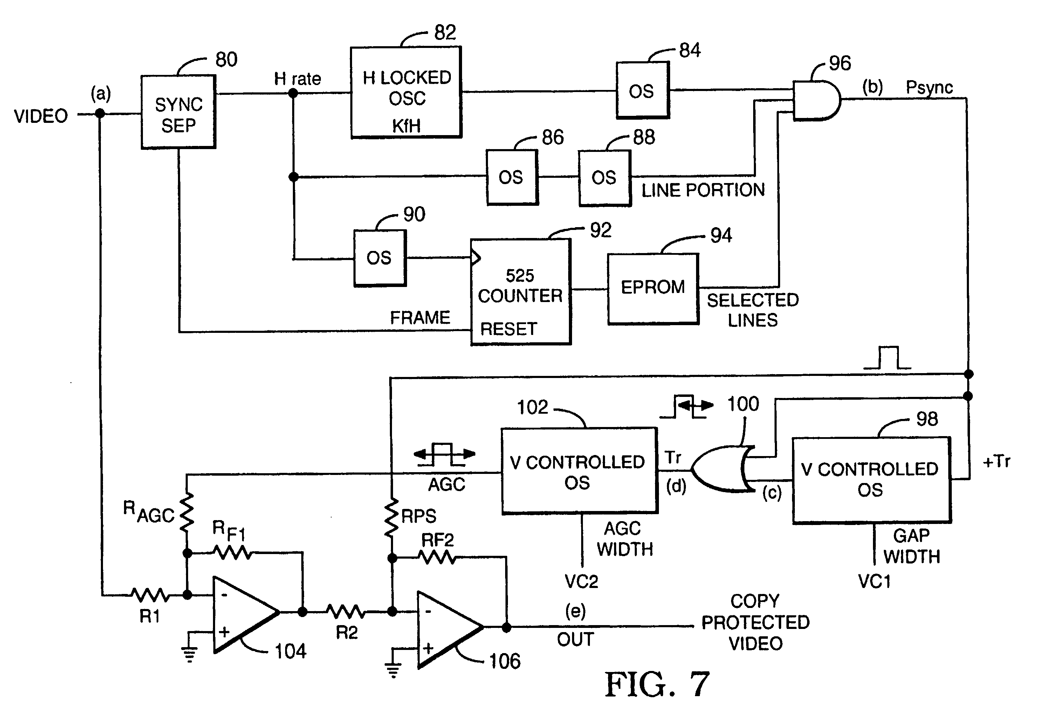

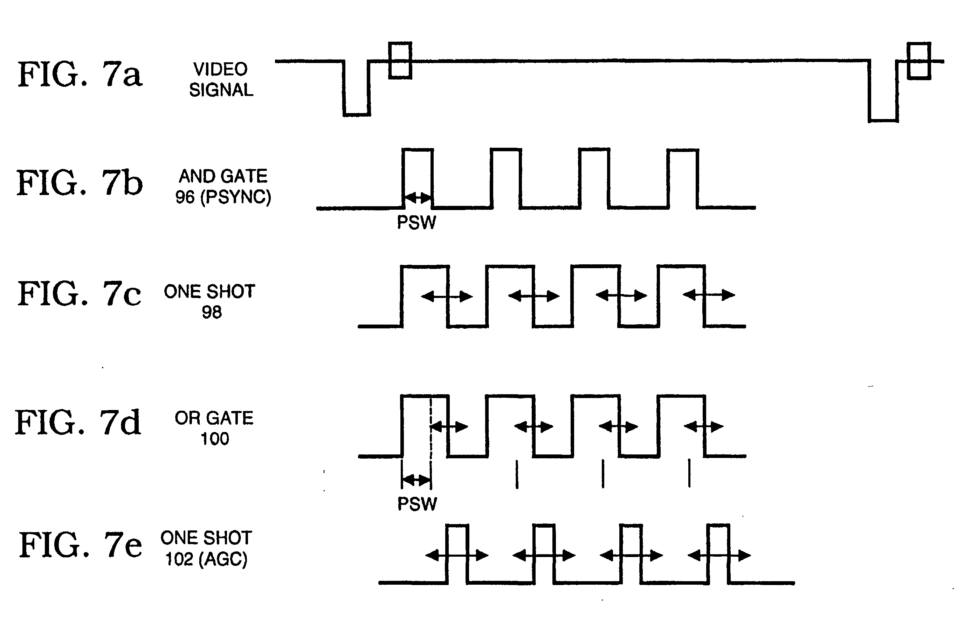

Figure 7 is a block schematic diagram depicting circuitry for generating a copy protection process of the invention that mimics the amplitude modulation of AGC pulses by position modulation. Program video with or without copy protection is the input video signal supplied at input (a) to a sync separator 80, which in turn outputs horizontal rate pulses. These horizontal rate pulses are coupled to a horizontal locked (triggered) oscillator 82. The output of this oscillator is preferably but not necessarily locked to the horizontal frequency at a higher frequency (i.e. 4 cycles per half a video line). A one shot (multivibrator) timer circuit 84 defines the positive pulse duration of the horizontal locked oscillator 82. Meanwhile, the sync separator 80 also outputs the horizontal rate pulses to a one shot 86, whose output is coupled to a one shot 88. The latter supplies a gating pulse for the location of pseudo sync pulses in the video line (i.e. 32 µseconds or first half of the video line). The location of the respective video lines that will contain the copy protection pulses is generated by a circuit consisting of a one shot 90, a (525) line counter 92 and an EPROM circuit 94. From the sync separator 80, horizontal pulses are supplied to the one shot 90 whose output is coincident with the beginning of the video line. A frame reset pulse is fed to the 525 line counter 92 (i.e. for NTSC) along with the horizontal rate pulses for the counter's clock. The counter's output is used to address the memory circuit of EPROM 94, which is programmed to output logic high pulses coincident with those video lines that will have the copy protection pulses. The output (b) of an AND gate 96 then comprises "inverted" pseudo sync pulses on selected video lines (i,e., in the vertical blanking interval).

One method for generating position modulated AGC pulses is to induce pulse width modulation on an inverted pseudo sync pulse signal and then trigger off the trailing edge of this pulse width modulated inverted pseudo sync pulse signal to generate AGC pulses. To this end, the output of AND gate 96 triggers a voltage controlled one shot timer 98 on the leading edge of an "inverted" pseudo sync pulse signal. The output (c) of one shot timer 98 is a pulse with a minimum width of the output of AND gate 96, and a maximum pulse width of 1.5 µseconds (or more) than its minimum pulse width. For example if the output of AND gate 96 has a pulse width of 2.3 µseconds, then the output of one shot timer 98 has pulse widths that vary according to voltage control VC I from 2.3 µseconds to at least 2.3 µsecond +1.5 µseconds or at least 3.8 µseconds. The output of one shot timer 98 is OR'd by an OR gate 100 with the output of AND gate 96 to ensure that the output (d) of OR gate 100 has a minimum width of the "inverted" pseudo sync pulse from the AND gate. The output of the OR gate 100 triggers on the trailing edge to output AGC pulses whose widths can be controlled voltage wise via a voltage control VC2 supplied to a voltage controlled one shot timer 102. The output of one shot timer 102 then provides AGC pulses that are varying in delay from the pseudo sync pulses' trailing edge on the order of from zero to at least 1.5 µseconds. The output of one shot timer 102 (AGC pulses) is fed to a summing amplifier 104 along with the input video signal. The output of the inverted pseudo sync pulse from AND gate 96 is negatively summed with the output of amplifier 104 via a (negative) summing amplifier 106. The output (e) of amplifier 106 then has position modulated AGC pulses relative to the pseudo sync pulses and is thus a dynamic copy protection signal.

Note Figure 7 illustrates that the AGC pulses also can be pulse width modulated if the one shot timer 84 is voltage controlled. Figures 7a to 7e show the wave forms generated at various locations (a) - (e) in the circuit of Figure 7.

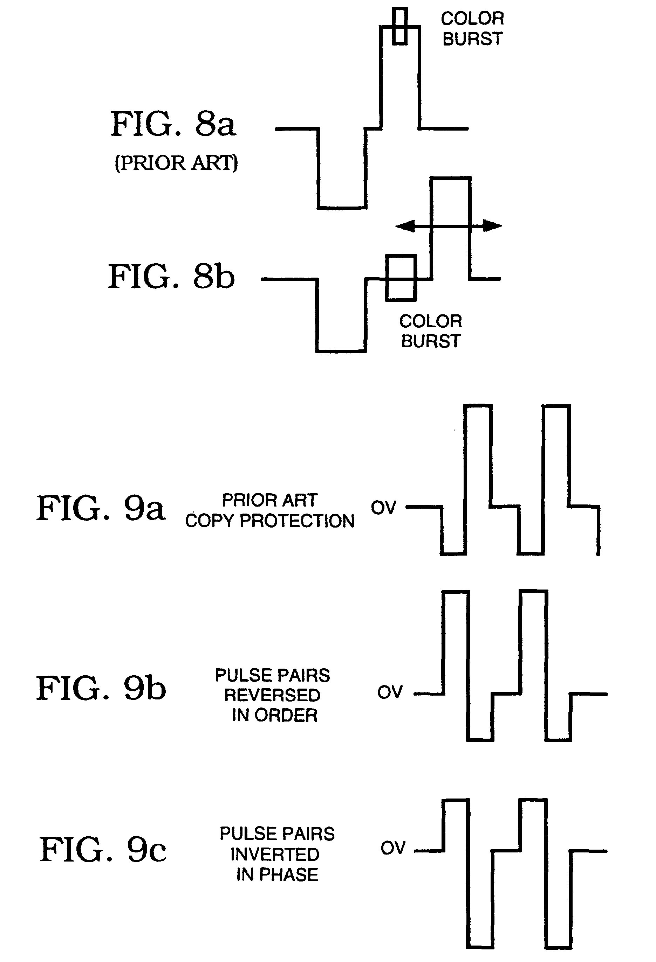

Figures 8a, 8b illustrate that the circuit of Figure 7 can be applied to copy protection pulses with normal sync and raised back porch AGC pulses such as exemplified by Figure 7a. Thus Figure 8b shows a dynamic position modulated copy protection signal that modifies the technique of Figure 3 of Patent 4,819,098. The signal shown in Figure 8b can occur in clusters or in selected video lines.

It should be noted that the copy protection process of the present invention can have position, pulse width and/or gap width modulation, and/or amplitude modulation, done on individual pseudo sync pulses, horizontal sync pulses, AGC pulses or raised back porch AGC pulses, over time from maximum separation (defeated copy protection) to minimum separation (full copy protection). For instance if there are 40 added pulse pairs of normal pseudo sync pulses and AGC pulses, one can in any combination slowly increase the separation between the AGC pulses and pseudo sync pulses in any number of pulse pair(s) at a time or all of them at a time until sufficient pulse pairs of copy protection pulse pairs have maximum separation to turn off copy protection. Additionally, one can in any combination slowly decrease the separation from maximum separation (defeated copy protection) to minimum separation (full copy protection).

As a further example, copy protection signals can be applied throughout the vertical blanking interval and its vicinity, and the copy protection signals can include different amounts of added pulses per video line. In one embodiment for example, a single pseudo sync pulse and/or AGC pulse in a video line can be modulated. As previously mentioned, the AGC or raised back porch AGC pulses also can be amplitude modulated in combination with the above-mentioned processes.

Figure 9a depicts a waveform of a prior art copy protection signal. Figure 9b depicts a waveform of a defeating or modifying method for the signal of Figure 9a which reverses the order of at least portions of the pseudo sync and/or AGC pulses. Figure 9c is a waveform of another method to defeat or modify the original process (Figure 9a for example) by phase shifting, i.e., inverting, at least portions of the pseudo syncs and/or AGC pulses. In the case of Figure 9c the phase shift is a 180 degree reversal of pseudo syncs and AGC pulses. Note that the methods described for Figures 9b and 9c can be applied to those copy protection pulses around or within the horizontal blanking interval. The methods described for Figures 9b and 9c can of course be combined with relative attenuation, pulse narrowing, level shifting, and/or position modulation copy protection defeating processes.

Also it is possible to use the techniques described for Figures 9b and 9c to synthesize a copy protection signal. To dynamically turn on and off the copy protection process for example, the technique starts with a copy protection signal as shown in Figure 9a (copy protection effectively on). The technique continues for example, by slowly reversing the order of the pseudo syncs with the AGC pulses until the (modified) copy protection signal substantially becomes Figure 9b (copy protection effectively off). Similarly, if the technique starts with Figure 9a where the copy protection is fully on, then the copy protection process is slowly turned off by inverting (phase shifting), attenuating, level shifting and/or position modulating the pseudo syncs and/or AGC pulses until the (modified) copy protection signal becomes the signal depicted in Figure 9c.

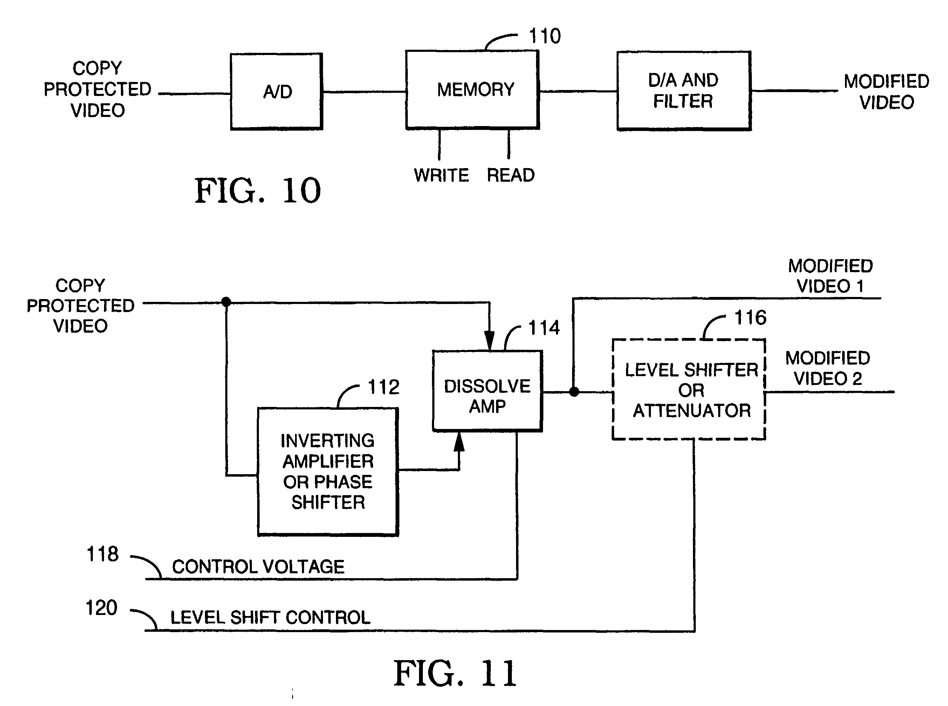

Referring to Figure 10, by using a video memory 110 and/or a regenerating signal, the waveform of Figure 9a can be transformed to that of Figure 9b. In this embodiment, the video memory 110 stores for example, the signal of Figure 9a wherein however, the signal is read out of memory in reverse order to achieve the signal of Figure 9b. Thus, the block diagram of Figure 10 is an example of circuitry for implementing the latter signal reversing technique for all or selected portions of the pseudo syncs and/or AGC pulses.

Figure 11 illustrates circuitry for providing the phase shifting technique of previous mention, which transforms the waveform of Figure 9a to that of Figure 9c. To this end, an inverting (or phase shifting) amplifier 112 inverts (phase shifts) the signal of Figure 9a. A video mix dissolve amplifier 114 (or switcher) is used to transform or transition the waveform from that of Figure 9a to that of Figure 9c. The dissolve amplifier 114 is responsive to a control voltage 118. Accordingly, Figure 11 illustrates circuitry for inverting or phase shifting at least portions of the pseudo syncs and/or AGC pulses by way of the inverting or phase shifting amplifier 112 along with the switching or dissolving amplifier 114. An optional level shifting and/or attenuating circuit 116 is also illustrated in Figure 11 in phantom line. The level shifting/attenuating circuit 116 is responsive to a level shift control signal 120.

Although the invention has been described herein relative to specific embodiments, various additional features and advantages will be apparent from the description and drawings, and thus the scope of the invention is defined by the following claims and their equivalents.

## Claims

1. A method of providing copy protection signals in a video signal employing sync or pseudo sync pulses followed by respective AGC pulses, wherein the AGC pulses are provided with the leading edges thereof generally coincident with the trailing edges of respective sync or pseudo sync pulses thereby having substantially zero position separation consistent with maintaining copy protection, the method comprising:
dynamically increasing over one or more video lines the position separation between the sync or pseudo sync pulses and the respective AGC pulses to a position separation which defeats or reduces the effects of the copy protection signals;
dynamically decreasing over time the position separation between the sync or pseudo sync pulses and the respective AGC pulses to return to the substantially zero position separation that maintains copy protection; and
wherein the steps of dynamically increasing and decreasing are repeated over said one or more video lines.

2. A method as claimed in Claim 1, comprising:
dynamically varying the position separation between one or more sync or pseudo sync pulses and respective AGC pulses from the substantially zero position separation to a position separation of about 1.5 microseconds.

3. A method as claimed in Claim 1, comprising:
dynamically varying the position separation by varying the advancement of the trailing edge of the sync or pseudo sync pulses with respect to the respective AGC pulses.

4. A method as claimed in Claim 1, comprising:
dynamically varying the position separation by varying the delay of the leading edge of the AGC pulses with respect to the respective sync or pseudo sync pulses.

5. A method as claimed in Claim 1, comprising:
dynamically varying the position separation by varying the advancement of the sync or pseudo sync pulses while varying oppositely the delay of the respective AGC pulses.

6. A method as claimed in Claim 1, comprising:
dynamically varying the position separation by varying the pulse width of the AGC pulses and/or the respective sync or pseudo sync pulses.

7. A method as claimed in Claim 1, comprising:
dynamically narrowing the pulse width of the AGC pulses and/or of the respective sync or pseudo sync pulses from 100 percent to about 50 percent and back to 100 percent of the normal pulse's width.

8. Apparatus for providing copy protection signals in a video signal employing sync or pseudo sync pulses followed by respective AGC pulses and including timing circuitry (80-94) for providing timing signals indicative of video lines which are to contain the copy protection signals and of the location in the video lines of selected copy protections signals, the apparatus comprising:
circuit means (98-102) responsive to the timing circuitry for generating pseudo sync pulses and AGC pulses,
wherein said circuit means (98-102) are arranged to dynamically increase over one or more video lines the position separation between the sync or pseudo sync pulses and the respective AGC pulses to a position separation which defeats or reduces the effects of the copy protection signals ; and
wherein said circuit means (98-102) are arranged to dynamically decrease over time the position separation between the sync or pseudo sync pulses and the respective AGC pulses to return to a substantially zero position separation that maintains copy protection;
the circuit means being arranged to repeat the dynamically increasing and decreasing steps over one or more video lines.

9. An apparatus as claimed in Claim 8, wherein:
said circuit means (98-102) generate the AGC pulses as raised back porch AGC pulses; and
said circuit means dynamically position and/or width modulate the raised back porch AGC pulses over time from minimum to maximum separation and back to minimum separation, with respect to the respective sync or pseudo sync pulses.

10. An apparatus as claimed in Claim 8, wherein:
the copy protection signals include sync or pseudo sync pulses together with respective AGC or raised back porch AGC pulses; and
said circuit means (98-102) cause dynamic position, pulse width and/or gap width modulation of the pulses over time from maximum to minimum gap separation.

11. An apparatus as claimed in Claim 8, wherein the timing circuitry (80-94) comprises :
sync separating means (80) for providing a horizontal rate (H rate) signal and a frame rate signal;
means (82, 84) responsive to the H rate signal for providing a first signal which defines a positive pulse duration of an H rate related signal;
multivibrator means (86, 88) responsive to the H rate signal for providing a second signal indicative of the location of sync pulses in a video line;
means (90-94) responsive to the H rate and frame rate signals for providing a third signal indicative of the video lines which are to contain the copy protection signals; and
logic means (96) responsive to the first, second and third signals for providing inverted pseudo sync pulses on selected video lines;
wherein the circuit means comprises:
one shot timer circuit means (98-102) responsive to control voltages (VC1, VC2) for providing AGC pulses that are varying in width and in position delay.

12. An apparatus as claimed in Claim 11, wherein:
said means for providing the first signal includes an H locked oscillator (82);
said means for providing the third signal includes a memory means (94) responsive to a line counter (92); and
said one shot timer circuit means includes a pair of voltage controlled one shot circuits (98, 102).

13. An apparatus as claimed in Claim 12, further comprising
summing means (104, 106) receiving the video signal and responsive to the circuit means (98-102) and the timing circuitry (80-94) for adding to the video signal a dynamic copy protection signal formed of AGC pulses which are position, amplitude and/or pulse width modulated relative to the respective pseudo sync pulses.

14. An apparatus as claimed in Claim 13, wherein the summing means comprise:
summing amplifiers (104, 106) receiving the video signal and responsive to said inverted pseudo sync pulses and said width and position delay varying AGC pulses, for providing the position modulated AGC pulses relative to the pseudo sync pulses, resulting in a dynamically varying copy protected video signal.

15. An apparatus as claimed in Claim 14, wherein:
said means for providing the first signal includes an H locked oscillator (82);
said means for providing the third signal includes a memory means (94) responsive to a line counter (92);
said one shot timer circuit means includes a pair of voltage controlled one shot circuits (98, 102); and
said summing amplifiers include first (104) and second (106) summing amplifiers responsive to said width and position delay varying AGC pulses and said inverted pseudo sync pulses, respectively.

## Patentansprüche

1. Verfahren zum Bereitstellen eines Kopierschutzsignals in einem Videosignal, das Sync- oder Pseudo-Sync-Impulse gefolgt von jeweiligen AGC-Impulsen verwendet, wobei die AGC-Impulse mit führenden Flanken versehen sind, die allgemein mit den abfallenden Kanten von betreffenden Sync- oder Pseudosync-Impulsen zusammenfallen, wodurch sie im Wesentlichen einen Positionsabstand Null haben in Übereinstimmung mit der Aufrechterhaltung von Kopieschutz, wobei bei dem Verfahren:
über eine oder mehrere Videozeilen der Positionsabstand zwischen den Sync- oder Pseudosync-Impulsen und den jeweiligen AGC-Impulsen dynamisch erhört wird auf einen Positionsabstand, der die Wirkungen der Kopierschutzsignale außer Kraft setzt oder reduziert,
der Positionsabstand zwischen den Sync- oder Pseudosync-Impulsen und den jeweiligen AGC-Impulsen im Laufe der Zeit dynamisch vermindert wird, um zu dem Positionsabstand von im Wesentlichen Null zurückzukehren, der den Kopierschutz aufrechterhält, und
wobei die Schritte des dynamischen Erhöhens und Vermindems über die eine oder mehrere Videozeilen wiederholt werden.

2. Verfahren nach Anspruch 1, bei dem:
der Positionsabstand zwischen einem oder mehreren Sync- oder Pseudosync-Impulsen und jeweiligen AGC-Impulsen von einem Positionsabstand von im Wesentlichen Null auf einen Positionsabstand von etwa 1,5 Mikrosekunden variiert wird.

3. Verfahren nach Anspruch 1, bei dem:
der Positionsabstand dynamisch variiert wird, indem das Vorziehen der führenden Flanke der Sync- oder Pseudosync-Impulse in Bezug auf die jeweiligen AGC-Impulse variiert wird.

4. Verfahren nach Anspruch 1, bei dem:
der Positionsabstand dynamisch variiert wird, indem die Verzögerung der führenden Flanke der AGC-Impulse in Bezug auf die jeweiligen Sync- oder Pseudosync-Impulse variiert wird.

5. Verfahren nach Anspruch 1, bei dem:
der Positionsabstand dynamisch variiert wird, indem das Vorziehen der Sync- oder Pseudosync-Impulse variiert wird, während entgegengesetzt die Verzögerung der jeweiligen AGC-Impulse variiert wird.

6. Verfahren nach Anspruch 1, bei dem:
der Positionsabstand dynamisch variiert wird, indem die Impulsbreite der AGC-Impulse und/oder der jeweiligen Sync- oder Pseudosync-Impulse variiert wird.

7. Verfahren nach Anspruch 1, bei dem die impulsbreite der AGC-Impulse und/oder der jeweiligen Sync- oder Pseudosync-Impulse von 100% bis auf etwa 50% dynamisch vermindert wird und zurück auf 100% der normalen Impulsbreite.

8. Vorrichtung zum Bereitstellen eines Kopierschutzsignals in einem Videosignal, das Sync- oder Pseudosync-Impulse gefolgt von jeweiligen AGC-Impulsen verwendet, die Zeitschaltungen (80, 94) aufweist, um Zeitsignale bereitzustellen, die die Videozeilen, welche die Kopierschutzsignale enthalten sollen, und den Ort in den Videozeilen von ausgewählten Kopierschutzsignalen anzeigen,
wobei die Vorrichtung aufweist:
Schaltungseinrichtungen (98-102), die auf die Zeitschaltungen reagieren, um Pseudosync-Impulse und AGC-Impulse zu erzeugen, wobei die Schaltungseinrichtungen (98-102) so ausgelegt sind, um den Positionsabstand zwischen den Sync- oder Pseudosync-Impulsen und den jeweiligen AGC-Impulsen auf einen Positionsabstand dynamisch zu erhöhen, der die Wirkungen des Kopierschutzsignals außer Kraft setzt oder reduziert, und
wobei die Schaltungseinrichtungen (98-102) dazu ausgelegt sind, im Laufe der Zeit den Positionsabstand zwischen den Sync- oder Pseudosync-Impulsen und den jeweiligen AGC-Impulsen dynamisch zu vermindern, um auf einen Positionsabstand von im Wesentlichen Null zurückzukehren, der den Kopierschutz aufrechterhält,
wobei die Schaltungseinrichtungen dazu ausgelegt sind, die Schritte der dynamischen Erhöhung und Verminderung über eine oder mehrere Videozeilen zu wiederholen.

9. Vorrichtung nach Anspruch 8, wobei:
die Schaltungseinrichtungen (98-102) die AGC-Impulse als erhöhte Austastschulter-AGC-Impulse erzeugt, und
die Schaltungseinrichtungen die erhöhten Austastschulter-AGC-Impulse im Laufe der Zeit von einem minimalen zu einem maximalen Abstand und zurück zu einem minimalen Abstand in Bezug auf die jeweiligen Sync- oder Pseudosync-Impulse dynamisch positionsmoduliert und/oder dynamisch pulsbreitenmoduliert.

10. Vorrichtung nach Anspruch 8, wobei:
die Kopierschutzsignale Sync- oder Pseudosync-Impulse zusammen mit jeweiligen AGC- oder erhöhten Austastschulter-AGC-Impulsen enthalten, und
die Schaltungseinrichtungen (98-102) eine dynamische Positions-Impulsbreiten- und/oder Lückenbreitenmodulation der Impulse im Laufe der Zeit von einem maximalen zu einem minimalen Lückenabstand verursacht.

11. Vorrichtung nach Anspruch 8, wobei die Zeitschaltungen (80-94) aufweisen:
eine Sync-Separationseinrichtung (80) zum Bereitstellen eines Horizontalfrequenzsignals (H rate) und eines Wiederhotratensignats,
eine Einrichtung (82, 84), die auf das Horizontalfrequenzsignal reagiert, um ein erstes Signal bereitzustellen, das eine positive Impulsdauer eines zugehörigen Horizontalfrequenzsignals definiert,
eine Multivibratoreinrichtung (86, 88), die auf das Horizontalfrequenzsignal reagiert, um ein zweites Signal bereitzustellen, das den Ort der Sync-Impulse in einer Videozeile anzeigt,
Einrichtungen (90-94), die auf das Horizontalfrequenzsignal und das Wiederholratensignal reagieren, um ein drittes Signal bereitzustellen, das die Videozeilen anzeigt, die die Kopieschutzsignale enthalten sollen, und
eine Logikeinrichtung (96), die auf die ersten, zweiten und dritten Signale reagiert, um invertierte Pseudosync-Impulse auf ausgewählten Videozeilen bereitzustellen,
wobei die Schaltungseinrichtungen aufweisen:
- eine monostabile Multivibrator-Zeitgeberschaltungseinrichtung (98-102), die auf Steuerspannungen (VC1, VC2) reagiert, um AGC-Impulse bereitzustellen, die in Impulsbreite und Positionsverzögerung variieren.

12. Vorrichtung nach Anspruch 11, wobei
die Einrichtungen zum Bereitstellen des ersten Signals einen H-locked Oszillator (82) enthalten,
die Einrichtungen zum Bereitstellen des dritten Signals eine Speichereinrichtung (94) enthalten, die auf eine Zeilenzähler (92) reagiert,
wobei die monostabile Multivibrator-Zeitgeberschaltung ein Paar von spannungsgesteuerten monostabilen Multivibratoren (98-102) aufweist.

13. Vorrichtung nach Anspruch 12, die weiter aufweist:
Summiereinrichtungen (104, 106), die das Videosignal emfpangen und auf die Schaltungseinrichtungen (98-102) und die Zeitschaltungen (80, 94) reagieren, um dem Videosignal ein dynamisches Kopierschutzsignal hinzuzufügen, das aus AGC-Impulsen gebildet ist, die in Bezug auf Position, Amplitude und/oder Impulsbreite moduliert in Bezug auf jeweilige Pseudosync-Impulse sind.

14. Vorrichtung nach Anspruch 13, wobei die Summiereinrichtungen aufweisen:
Summierverstärker (104, 106), die das Videosignal empfangen und auf die invertierten Pseudosync-Impulse und die impulsbreitenvariierenden und positionsverzögerungsvariierenden AGC-Impulse reagieren, um positionsmodulierte AGC-Impulse relativ zu den Pseudosync-Impulsen bereitzustellen, was in einem dynamisch variierenden kopiergeschützten Videosignal resultiert.

15. Vorrichtung nach Anspruch 14, wobei:
die Einrichtungen zum Bereitstellen des ersten Signals einen H-locked Oszillator (82) enthalten,
die Einrichtungen zum Bereitstellen des dritten Signals eine Speichereinrichtung (94) aufweisen, die auf einen Zeilenzähler (92) reagiert,
wobei die monostabile Multivibrator-Zeitgeberschaltungseinrichtung ein Paar von monostabilen Multivibratorschaltungen (98-102) aufweist, und
die Summierverstärker erste (104) und zweite (106) Summierverstärker umfassen, die auf die impulsbreitenvariierenden und positionsverzögerungsvariirenden AGC-Impulse und die invertierten Pseudosync-Impulse reagieren.

## Revendications

1. Procédé de fourniture de signaux de protection contre la copie dans un signal vidéo utilisant des impulsions de synchronisation ou de pseudo-synchronisation suivies d'impulsions de CAG respectives, les impulsions de CAG étant fournies de façon que leurs flancs avant coïncident globalement avec les flancs arrière des impulsions de synchronisation ou de pseudo-synchronisation respectives afin d'avoir une séparation de position sensiblement nulle en cohérence avec le maintien de la protection contre la copie, le procédé comprenant :
le fait d'augmenter dynamiquement sur une ou plusieurs lignes vidéo la séparation de position entre les impulsions de synchronisation ou de pseudo-synchronisation et les impulsions de CAG respectives jusqu'à une séparation de position qui annule ou réduit les effets des signaux de protection contre la copie ;
le fait de réduire dynamiquement au cours du temps la séparation de position entre les impulsions de synchronisation ou de pseudo-synchronisation et les impulsions de CAG respectives pour revenir à la position de séparation sensiblement nulle qui préserve la protection contre la copie ; et
dans lequel les étapes d'augmentation et de réduction dynamiques sont répétées sur lesdites une ou plusieurs lignes vidéo.

2. Procédé selon la revendication 1, comprenant :
le fait de faire varier dynamiquement la séparation de position entre une ou plusieurs impulsions de synchronisation ou de pseudo-synchronisation et des impulsions de CAG respectives de la séparation de position sensiblement nulle à une séparation de position d'environ 1,5 microseconde.

3. Procédé selon la revendication 1, comprenant :
le fait de faire varier dynamiquement la séparation de position en faisant varier l'avance du flanc arrière des impulsions de synchronisation ou de pseudo-synchronisation par rapport aux impulsions de CAG respectives.

4. Procédé selon la revendication 1, comprenant :
le fait de faire varier dynamiquement la séparation de position en faisant varier le retard du flanc arrière des impulsions de CAG par rapport aux impulsions de synchronisation ou de pseudo-synchronisation respectives.

5. Procédé selon la revendication 1, comprenant :
le fait de faire varier dynamiquement la séparation de position en faisant varier l'avance des impulsions de synchronisation ou de pseudo-synchronisation tout en faisant varier en sens opposé le retard des impulsions de CAG respectives.

6. Procédé selon la revendication 1, comprenant :
le fait de faire varier dynamiquement la séparation de position en faisant varier la largeur d'impulsion des impulsions de CAG et/ou des impulsions de synchronisation ou de pseudo-synchronisation respectives.

7. Procédé selon la revendication 1, comprenant :
le fait de réduire dynamiquement la largeur d'impulsion des impulsions de CAG et/ou des impulsions de synchronisation ou de pseudo-synchronisation respectives de 100 % à environ 50 % puis de nouveau à 100 % de la largeur normale de l'impulsion.

8. Appareil pour fournir des signaux de protection contre la copie dans un signal vidéo utilisant des impulsions de synchronisation ou de pseudo-synchronisation suivies d'impulsions de CAG respectives et comportant un ensemble de circuits de cadencement (80-94) destinés à fournir des signaux de cadencement représentatifs de lignes vidéo qui doivent contenir les signaux de protection contre la copie, et de la position dans les lignes vidéo de signaux sélectionnés de protection contre la copie, l'appareil comprenant :
des moyens à circuits (98-102) sensibles à l'ensemble de circuits de cadencement pour générer des impulsions de pseudo-synchronisation et des impulsions de CAG,
dans lequel lesdits moyens à circuits (98-102) sont conçus pour augmenter dynamiquement sur une ou plusieurs lignes vidéo la séparation de position entre les impulsions de synchronisation ou de pseudo-synchronisation et les impulsions de CAG respectives jusqu'à une séparation de position qui annule ou réduit les effets des signaux de protection contre la copie ; et
dans lequel lesdits moyens à circuits (98-102) sont conçus pour réduire dynamiquement au cours du temps la séparation de position entre les impulsions de synchronisation ou de pseudo-synchronisation et les impulsions de CAG respectives pour revenir à une séparation de position sensiblement nulle qui préserve la protection contre la copie ;
les moyens à circuits étant conçus pour répéter les étapes d'augmentation et de réduction dynamiques sur une ou plusieurs lignes vidéo.

9. Appareil selon la revendication 8, dans lequel :
lesdits moyens à circuits (98-102) génèrent les impulsions de CAG sous la forme d'impulsions de CAG à palier arrière surélevé ; et
lesdits moyens à circuits positionnent et/ou modulent en largeur dynamiquement au cours du temps les impulsions de CAG à palier arrière surélevé d'une séparation minimum à une séparation maximum puis de nouveau à une séparation minimum, par rapport aux impulsions de synchronisation ou de pseudo-synchronisation respectives.

10. Appareil selon la revendication 8, dans lequel :
les signaux de protection contre la copie comprennent des impulsions de synchronisation ou de pseudo-synchronisation en association avec des impulsions de CAG ou des impulsions de CAG à palier arrière surélevé respectives ; et
lesdits moyens à circuits (98-102) provoquent une modulation dynamique au cours du temps de la position, de la largeur d'impulsion et/ou de la largeur d'interstice des impulsions d'une séparation d'interstice maximum à minimum.

11. Appareil selon la revendication 8, dans lequel l'ensemble de circuits de cadencement (80-94) comprend :
un moyen de séparation de synchronisation (80) pour fournir un signal de fréquence horizontale (fréquence H) et un signal de fréquence de trame ;
un moyen (82, 84) sensible au signal de fréquence H pour fournir un premier signal qui définit une durée d'impulsion positive d'un signal dépendant de la fréquence H ;
un moyen multivibrateur (86, 88) sensible au signal de fréquence H pour fournir un second signal représentatif de la position d'impulsions de synchronisation dans une ligne vidéo ;
un moyen (90-94) sensible aux signaux de fréquence H et de fréquence de trame pour fournir un troisième signal représentatif des lignes vidéo qui doivent contenir les signaux de protection contre la copie ; et
un moyen logique (96) sensible aux premier, second, et troisième signaux pour fournir des impulsions de pseudo-synchronisation inversées sur des lignes vidéo sélectionnées ;
dans lequel le moyen à circuit comprend :
un moyen (98-102) à circuit de temporisation monostable sensible à des tensions de commande (VC1, VC2) pour fournir des impulsions de CAG qui varient en largeur et en retard de position.

12. Appareil selon la revendication 11, dans lequel :
ledit moyen de fourniture du premier signal comporte un oscillateur verrouillé en H (82) ;
ledit moyen de fourniture du troisième signal comporte un moyen à mémoire (94) sensible à un compteur de ligne (92) ; et
ledit moyen à circuit temporisateur monostable comporte une paire de circuits monostables commandés en tension (98-102).

13. Appareil selon la revendication 12, comprenant en outre des moyens de sommation (104, 106) recevant le signal vidéo et sensibles aux moyens à circuits (98-102) et à l'ensemble de circuits de cadencement (80-94) pour additionner au signal vidéo un signal dynamique de protection contre la copie formé d'impulsions de CAG qui sont modulées en position, en amplitude et/ou en largeur d'impulsion par rapport aux impulsions de pseudo-synchronisation respectives.

14. Appareil selon la revendication 13, dans lequel les moyens de sommation comprennent :
des amplificateurs de sommation (104, 106) recevant le signal vidéo et sensibles auxdites impulsions de pseudo-synchronisation inversées et auxdites impulsions de CAG faisant varier la largeur et le retard de position, pour fournir les impulsions de CAG modulées en position par rapport aux impulsions de pseudo-synchronisation, ce qui a pour résultat un signal vidéo protégé contre la copie variant dynamiquement.

15. Appareil selon la revendication 14, dans lequel :
ledit moyen de fourniture du premier signal comprend un oscillateur verrouillé en H (82) ;
ledit moyen de fourniture du troisième signal comprend un moyen à mémoire (94) sensible à un compteur de ligne (92) ;
ledit moyen à circuit temporisateur monostable comprend une paire de circuits monostables commandés en tension (98, 102) ; et
lesdits amplificateurs de sommation comprennent des premier (104) et second (106) amplificateurs de sommation respectivement sensibles auxdites impulsions de CAG faisant varier la largeur et le retard de position et auxdites impulsions de pseudo-synchronisation inversées.
